# EUROPÄISCHE PATENTSCHRIFT

(11) **EP 2 040 969 B1**
(45) Veröffentlichungstag und Bekanntmachung des Hinweises auf die Patenterteilung: **15.08.2012**
(21) Anmeldenummer: 07730012.7
(22) Anmeldetag: 08.06.2007
(51) Int. Cl.: B60W 40/02, B62D 15/02

(54) **VERFAHREN ZUR UNTERSTÜTZUNG EINES EINPARKVORGANGS EINES FAHRZEUGS**
METHOD FOR ASSISTING WITH THE PARKING OF A VEHICLE
PROCEDE POUR ASSISTER UN PROCESSUS DE STATIONNEMENT D'UN VEHICULE

(30) Priorität: 03.07.2006 DE 102006030560
(43) Veröffentlichungstag der Anmeldung: 01.04.2009
(73) Patentinhaber: Robert Bosch GmbH, 70442 Stuttgart (DE)
(72) Erfinder: HERING, Michael, 71229 Leonberg (DE); ALBRECHT, Benno, 70839 Gerlingen (DE)
(86) Internationale Anmeldenummer: PCT/EP2007/055655
(87) Internationale Veröffentlichungsnummer: WO 2008/003562

(56) Entgegenhaltungen:
- EP-A- 1 170 171
- EP-A- 1 747 973
- EP-A1- 1 199 225
- WO-A-03/087874
- WO-A-2005/085044
- WO-A-2005/120932
- WO-A-2006/034923
- FR-A- 2 872 122
- FR-A1- 2 704 665

## Beschreibung

### Stand der Technik

Die Erfindung betrifft ein Verfahren zur Unterstützung eines Einparkvorgangs eines Fahrzeugs in eine seitlich zu dem zu parkenden Fahrzeug angeordnete Parklücke, wobei mittels einer Sensoranordnung des Fahrzeugs eine Länge der Parklücke während eines Vorbeifahrens des Fahrzeugs an der Parklücke erfasst wird.

Ein derartiges Verfahren ist als Funktion einer als Assistent für einen Fahrer des Fahrzeugs dienenden Parklückenlokalisierung, für die eine andere Bezeichnung Parking Space Localization (PSL) ist, zum Auffinden einer Parklücke im Allgemeinen bekannt. Insbesondere ist das Verfahren als Funktion einer Parklückenvermessung (PLV), die den Fahrer eines Fahrzeugs bei der Suche nach einer ausreichend großen Parklücke für sein Fahrzeug unterstützt, bekannt, wobei die Parklückenlokalisierung eine Verallgemeinerung der Parklückenvermessung darstellt. Die Parklückenvermessung kann mit einem Einparksystem zum semi-autonomen Einparken zusammenarbeiten, bei dem der Fahrer Fahr- und Bremspedal des Fahrzeugs bedienten muss, wohingegen das Lenken auch automatisch ausgeführt werden kann. Das System berechnet eine Bah-n-kurve für das Einparken des Fahrzeugs in die Parklücke und informiert den Fahrer, zum Beispiel mit Hilfe von akustischen Signalen, über die Aktionen, die er auszuführen hat, um das Fahrzeug in der Parklücke abzustellen. Ein Grundsatz dabei ist, dass das Fahrzeug eine vordere oder hintere Parklückenbegrenzung, beispielsweise einen Bordstein und/oder bereits parkende Fahrzeuge, weder touchieren noch an- oder überfahren darf. Umso genauer die Länge der Parklücke erfasst wird, umso zuverlässiger kann ein Einparkvorgang erfolgen.

Darüber hinaus ist aus DE 102 51 558 A1 ein Verfahren zur Ermittlung von Geometriedaten für Einparkvorgänge von Fahrzeugen bekannt. Dabei soll während eines seitlichen Entlangfahrens eines Fahrzeugs an einem Parkplatz mehrmals nacheinander der seitliche Abstand zwischen dem Fahrzeug und einem Fahrbahnrand mittels eines fahrzeugfesten Abstandssensors gemessen werden. Ferner soll die Länge der Parklücke über einen bei einem Passieren der Parklücke zurückgelegten Fahrweg erfasst werden. Eine nicht-parallele Vorbeifahrt an der Parklücke soll durch Berücksichtigung eines mathematischen Fahrzeugmodells und einer Erfassung eines Winkels zwischen der Fahrzeuglängsrichtung und dem Fahrbahnrand ausgeglichen werden.

Durch die DE 10 2005 015 396 A1 ist ein Verfahren bekannt, bei dem zur Bereitstellung einer zuverlässigen Referenz für eine seitliche Parklückenbegrenzung die Position der dem zu parkenden Fahrzeug abgewandten seitlichen Parklückenbegrenzung und/oder die Orientierung der seitlichen Parklückenbegrenzung bezüglich des zu parkenden Fahrzeugs aus den vor dem Erreichen und/oder nach dem Passieren der Parklücke von der Sensoranordnung erfassten Daten berechnet wird. Nach einer speziellen Weiterbildung wird hierzu der Gierwinkel zwischen in der Parklücke zu erreichenden Orientierung des Fahrzeuges und einer momentanen Orientierung der Fahrzeuglängsachse des zu parkenden Fahrzeuges beispielsweise auch fortwährend ermittelt.

Ferner offenbart die DE 102 20 426 A1 ein Verfahren zum Betreiben eines Parkhilfesystems für ein Fahrzeug. Das Abbremsen und/oder Beschleunigen des Fahrzeugs während eines Ein- und/oder Ausparkablaufs erfolgt dabei unter allgemeiner Berücksichtigung einer Bestimmung einer Länge und/oder einer Breite einer Parklücke bei einem Vorbeifahren des Fahrzeugs an der Parklücke. Anschließend wird ein Einparkablauf für das Fahrzeug in die Parklücke bestimmt. Während des folgenden Einparkablaufs wird aufgrund eines momentanen Lenkradeinschlags eine zukünftige Lenkwinkeländerung bestimmt und dem Fahrer mitgeteilt.

In der Praxis erweist sich oftmals die zuverlässige Bestimmung der Länge einer Parklücke als vergleichsweise schwierig, wenn das Fahrzeug auf eine Kurvenbahn an der zu bestimmenden Parklücke vorbei geführt wird, weil dabei die von dem Fahrzeug zurückgelegte Wegstrecke nicht der kürzesten Verbindungslinie zwischen den die Parklücke begrenzenden Hindernisse, also der tatsächlichen Länge der Parklücke entspricht. Vielmehr kann die zurückgelegte Wegstrecke größer oder kleiner als die zu bestimmende Länge der Parklücke sein. Dieses Problem ist besonders deshalb von hoher praktischer Relevanz, weil üblicherweise der Einparkvorgang von dem Fahrer bewusst durch Einlenken eingeleitet wird.

Es ist auch bereits daran gedacht worden, den Lenkwinkel des Fahrzeugs während des Vorbeifahrens an der Parklücke zu messen und die Orientierung von die Parklücke begrenzenden Begrenzungsobjekten bezüglich des Fahrzeugs zu bestimmen, den Lenkwinkel mit der Orientierung der Begrenzungsobjekte zu vergleichen und in Abhängigkeit des Vergleichs des Lenkwinkels mit der Orientierung der Begrenzungsobjekte die Länge und/oder die Tiefe der Parklücke zu berechnen. Ein solches Verfahren erfordert jedoch einen vergleichsweise hohen Rechenaufwand aufgrund der hierzu erforderlichen Auswertung der Signale diverser Sensoren.

Aus der WO 2005/085044 A1 ist eine Einparkhilfe für ein Fahrzeug bekannt, bei der eine Vermessung der Parklücke durch eine seitliche Abstandsmessung und eine Positionsbestimmung aus Signalen von Raddrehzahlsensoren und einem Lenkwinkelsensor erfolgt. WO 2005/085 044 A1 ist als nächstliegender Stand der Technik zu sehen.

Der Erfindung liegt die Aufgabe zugrunde, ein Verfahren der eingangs beschriebenen Art zur Unterstützung eines Einparkvorgangs eines Fahrzeugs anzugeben, das eine einfache Erfassung der Länge der Parklücke mit hoher Genauigkeit ermöglicht.

### Offenbarung der Erfindung

Diese Aufgabe wird erfindungsgemäß mit einem Verfahren der eingangs beschriebenen Art dadurch gelöst, dass eine von einer Geradeausfahrt des Fahrzeuges abweichende Bewegungsbahn des Fahrzeuges während des Vorbeifahrens an der Parklücke erfasst wird, und daraus ein Korrekturwert für die erfasste Länge der Parklücke ermittelt wird.

### Vorteile der Erfindung

Nach dem erfindungsgemäßen Verfahren wird somit die Parklücke bei einem Vorbeifahren des einzuparkenden Fahrzeugs zunächst in gewohnter Weise erfasst. Der sich bei einer Kurvenbahn ergebene systematische Fehler aufgrund der Differenz der Länge der Parklücke gegenüber der zurückgelegten Wegstrecke des Fahrzeuges wird erfindungsgemäß durch einen Korrekturwert ausgeglichen, der sich allein aus der erfassten Kurvenfahrt des einzuparkenden Fahrzeuges ergibt. Mit anderen Worten ist also sowohl die insbesondere sensorgestützte Erfassung der Orientierung der die Parklücke begrenzenden Objekte als auch die Erfassung der Tiefe der Parklücke entbehrlich, so dass die Erfindung mit geringem technischen Aufwand realisiert werden kann. Aufgrund der schnellen rechnerischen Bestimmung des Korrekturwertes wird zudem eine verbesserte Genauigkeit bei der Berechnung der tatsächlichen Länge der Parklücke erreicht. Zur Erfassung und Vermessung der Parklücke sind dabei bevorzugt seitlich bezüglich des Fahrzeugs ausgerichtete Sensoren vorgesehen. Durch das erfindungsgemäße Verfahren, das insbesondere ein Rückwärtseinparken betrifft und sich vor allem für Kraftfahrzeuge, und zwar sowohl für Personenkraftwagen als auch für Nutzfahrzeuge, eignet, werden also mögliche Fehler bezüglich der Ausmessung der Parklücke ausgeschaltet oder zumindest reduziert, welche aus einer in einer kurvigen Vorbeifahrt des zu parkenden Fahrzeugs an der Parklücke resultieren. Aufgrund der dadurch ermöglichten verbesserten Vorhersagegenauigkeit können einerseits überflüssige Einparkversuche in tatsächlich zu kleine, aber fehlerbehaftet zu groß vermessene Parklücken vermieden werden, und andererseits können auch vergleichsweise kleine Parklücken genutzt werden, die ohne die Erfindung angesichts nicht ausgeschalteter Fehlerquellen zu groß vermessen würden. Beispielsweise kann die Erfindung in einem semi-autonomen oder autonomen Einparksystem eingesetzt werden und die Funktion und Zuverlässigkeit des Einparksystems verbessern. Die Begrenzungsobjekte können beliebige, die Parklücke begrenzende Objekte wie beispielsweise ein bereits parkendes Fahrzeug, einen Bordstein oder einen Baum umfassen.

Die Bewegungsbahn des Fahrzeuges könnte mittels eines Satellitenempfängers (GPS) erfasst werden. Besonders vorteilhaft ist es hingegen, wenn die Bewegungsbahn des Fahrzeuges aufgrund der mittels eines Sensors erfassten Drehung des Fahrzeuges um seine Hochachse bestimmt wird. Hierdurch ist die Bewegungsbahn insbesondere unabhängig von äußeren Bezugspunkten erfassbar, so dass insbesondere Fehlereinflüsse bei der Messwerterfassung weitgehend vermieden werden. Als Sensor können sowohl zusätzliche als auch bereits in dem Fahrzeug vorhandene Sensoren beispielsweise auch redundant eingesetzt werden.

Dabei erweist es sich als besonders praxisgerecht, wenn die Bewegungsbahn des Fahrzeuges aufgrund eines erfassten Lenkradwinkels und/oder Lenkwinkels bestimmt wird, um so in einfacher Weise aus der Abweichung des Lenkwinkels von einer Mittellage auf eine Kurvenfahrt zu schließen. Zudem sind derartige Sensoren bei vielen modernen Fahrzeugen bereits vorhanden, deren Signal mit geringem Aufwand genutzt werden kann.

Eine andere, ebenfalls besonders Erfolg versprechende Weiterbildung der vorliegenden Erfindung wird dadurch erreicht, dass die Bewegungsbahn des Fahrzeuges aufgrund der erfassten Differenz der Wegstrecken der Räder beider Fahrspuren des Fahrzeugs bestimmt wird. Hierdurch wird mittels eines Radimpulszählers aufgrund der Wegstreckendifferenz der Kurveninnenbahn gegenüber der Kurvenaußenbahn der Radius der Bewegungsbahn erfasst.

Besonders praxisgerecht ist auch eine Ausführungsform des erfindungsgemäßen Verfahrens, bei dem die Bewegungsbahn des Fahrzeuges mittels eines Gierraten-Sensors bestimmt wird. Der kontinuierlich eine Gierrate als Drehgeschwindigkeit um die Hochachse erfasst und damit von anderen Sensoren zur Erfassung des Fahrzustandes unabhängig betrieben werden kann.

In ähnlich vorteilhafter Weise wird nach einer weiteren Ausgestaltung des Verfahrens die Bewegungsbahn des Fahrzeuges mittels eines Querbeschleunigungssensors bestimmt, welcher ebenfalls eine einfache und zugleich sehr zuverlässige Messwerterfassung ermöglicht. Der Korrekturwert kann dadurch mit hoher Genauigkeit bestimmt werden.

Der Korrekturwert könnte als eine zusätzliche Warnfunktion als optisches oder akustisches Warnsignal für den Fahrzeugführer bereitgestellt werden. Besonders zuverlässig ist hingegen eine Ausgestaltung des Verfahrens, bei der mittels des Korrekturwertes aus der erfassten Länge der Parklücke eine tatsächliche Parklückenlänge bestimmt wird, die dem Fahrzeugführer ausschließlich dargestellt wird. Zudem gestattet das Verfahren die Einbindung der tatsächlichen Parklückenlänge in automatisierte oder teilautomatisierte Einparkhilfen.

Solange das Fahrzeug einer konstanten Kurvenbahn folgt, kann der erfasste Radius der Kurvenbahn der gesamten Wegstrecke des Fahrzeuges bei der Vorbeifahrt an der Parklücke als Korrekturwert zugrunde gelegt werden. Sofern sich jedoch, wie in der Praxis üblich, der Kurvenradius ständig ändert, erweist sich eine Abwandlung als besonders hilfreich, bei welcher der Korrekturwert kontinuierlich oder in kurzen zeitlichen Abständen erfasst wird, um selbst dann die Länge der Parklücke mit hoher Genauigkeit erfassen zu können, wenn sich das Vorzeichen des Lenkwinkels während der Vorbeifahrt ändert, der Fahrer das Fahrzeug also beispielsweise von einer Linkskurve in eine Rechtskurve steuert.

### Zeichnung

Ein Ausführungsbeispiel der Erfindung ist in der Zeichnung schematisiert dargestellt und wird nachfolgend näher beschrieben. Es zeigen
- Figur 1: eine Einparksituation bei einer parallelen Vorbeifahrt eines einzuparkenden Fahrzeugs an einer Parklücke,
- Figur 2: eine Einparksituation bei einer passiven Kurvenfahrt des einzuparkenden Fahrzeugs.

### Beschreibung des Ausführungsbeispiels

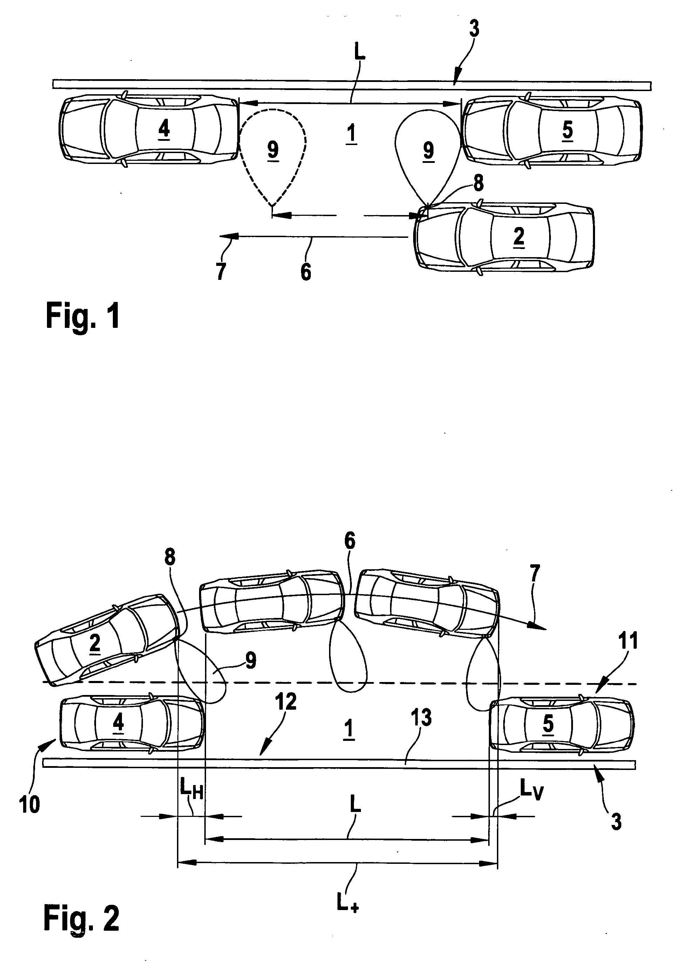

Figur 1 zeigt ein in eine seitliche Parklücke 1 einzuparkendes, als Personenkraftwagen ausgebildetes Fahrzeug 2 in einem typischen Anwendungsfall der Erfindung. Die Parklücke 1 befindet sich an einer seitlichen Fahrbahnbegrenzung 3 zwischen zwei bereits an der Fahrbahnbegrenzung 3 geparkten Fahrzeugen 4, 5. Das einzuparkende Fahrzeug 2, das auf einer Fahrzeugbahn 6 in einer durch einen Pfeil 7 symbolisierten Vorwärtsrichtung an der Parklücke 1 vorbeifährt, weist eine Sensoranordnung auf, von der hier beispielhaft ein auf der rechten Fahrzeugseite vorne angeordneter Sensor 8, vorteilhaft ein Ultraschallsensor, mit einem keulenförmigen Sensorfeld 9 gezeigt ist.

Wie zu erkennen, entspricht die Länge L der Parklücke im Wesentlichen der zurückgelegten Fahrstrecke des Fahrzeuges 2, wobei die mit der Keulenform des Sensorfelds 9 einhergehende Abweichung in an sich bekannter Weise bei der rechnerischen Ermittlung der Länge L Berücksichtigung findet.

Demgegenüber zeigt die Figur 2 eine Einparksituation bei einer passiven Kurvenfahrt des einzuparkenden Fahrzeugs 2. Beispielhaft ist das einzuparkende Fahrzeug 2 mit dem Sensorfeld 9 entlang der Bewegungsbahn 6 zu drei verschiedenen Zeitpunkten dargestellt.

Es ist zu erkennen, dass die Fahrzeugbahn 6 des einzuparkenden Fahrzeugs 2 kurvenförmig, und zwar hier konvex, ausgebildet ist, wohingegen sich die Fahrbahnbegrenzung 3 und die geparkten Fahrzeuge 4, 5 in einer in etwa linearen Anordnung befinden. Man spricht in diesem Fall von einer passiven Kurvenfahrt des einzuparkenden Fahrzeugs 2 hinsichtlich der Parklücke 1.

In diesem Ausführungsbeispiel ist der Lenkwinkel des einzuparkenden Fahrzeugs 2 während des Vorbeifahrens an der Parklücke 1 kleiner 0°, und die Orientierung der Begrenzungsobjekte 10, 11, 12 - bezogen auf das einzuparkende Fahrzeug 2 - weist eine einen Vorzeichenwechsel beinhaltende Änderung auf.

Begrenzt wird die Parklücke 1 von einem ersten, hinteren Begrenzungsobjekt 10, das von einem ersten bereits geparkten Fahrzeuge 4 gebildet wird, von einem zweiten, vorderen Begrenzungsobjekt 11, das von dem zweiten bereits geparkten Fahrzeuge 5 gebildet ist, und von einem dritten, seitlichen Begrenzungsobjekt 12, das von einem Bordsteinabschnitt 13 der Fahrbahnbegrenzung 3 gebildet wird. Während des Vorbeifahrens des einzuparkenden Fahrzeugs 2 an der Parklücke 1 wird von der Sensoranordnung des Fahrzeugs 2 eine fehlerbehaftete Länge L₊ erfasst, die um die Summe aus einer vorderen Längenabweichung L_{V} und einer hinteren Längenabweichung L_{H} größer ist als die tatsächliche Länge L der Parklücke.

Gleichzeitig wird während des Vorbeifahrens der Lenkwinkel des einzuparkenden Fahrzeuges 2 gemessen und daraus der Radius der Kurvenbahn ermittelt. Dieser allein dient nachfolgend als Korrekturwert zur Bestimmung der tatsächlichen Länge L der Parklücke auf der Basis der fehlerbehafteten gemessenen Länge L₊.

Demgegenüber führt eine in Vorbeifahrt des einzuparkenden Fahrzeuges auf einer konkaven Bahn in Bezug auf die Parklücke zu dem umgekehrten Fall, dass eine fehlerbehaftete Länge der Parklücke erfasst wird, die kleiner ist als die tatsächliche Länge der Parklücke. Eine solche Situation tritt in der Praxis vergleichsweise häufig auf, wenn der Fahrer in einem relativ großen Abstand an einer Reihe geparkter Fahrzeuge vorbeifährt. Sieht er vor sich eine potenziell passende Parklücke verringert er häuft intuitiv den Abstand zu den parkenden Fahrzeugen, um sein Fahrzeug nach dem passieren der Parklücke leichter rückwärts in diese hinein steuern zu können. Das führt dazu, dass der Fahrer beispielsweise bei einer Parklücke auf der rechten Seite zunächst leicht nach rechts lenkt und diese Lenkbewegung anschließend durch eine Lenkkorrektur nach links wieder kompensiert, um nicht mit den parkenden Fahrzeugen zu kollidieren. Direkt gemessen werden kann beim Vorbeifahren an der Parklücke jedoch nicht die Länge, sondern nur die Länge des Bogens.

## Patentansprüche

1. Verfahren zur Unterstützung eines Einparkvorgangs eines Fahrzeugs (2) in eine seitlich zu dem zu parkenden Fahrzeug (2) angeordnete Parklücke (1), wobei mittels einer Sensoranordnung des Fahrzeugs (2) eine Länge (L) der Parklücke (1) während eines Vorbeifahrens des Fahrzeugs (2) an der Parklücke (1) erfasst wird und wobei eine von einer Geradeausfahrt des Fahrzeuges (2) abweichende Bewegungsbahn (6) des Fahrzeuges (2) während des Vorbeifahrens an der Parklücke (1) erfasst wird und wobei daraus ein Korrekturwert für die erfasste Länge (L₊) der Parklücke (1) ermittelt wird, **dadurch gekennzeichnet, dass** die Bewegungsbahn (6) des Fahrzeuges (2) aufgrund der erfassten Differenz der Wegstrecken der Räder beider Fahrspuren des Fahrzeugs (2) bestimmt wird.

2. Verfahren nach Anspruch 1, **dadurch gekennzeichnet, dass** die Bewegungsbahn (6) des Fahrzeuges (2) aufgrund der mittels eines Sensors erfassten Drehung des Fahrzeuges (2) um seine Hochachse bestimmt wird.

3. Verfahren nach Anspruch 1 oder 2, **dadurch gekennzeichnet, dass** die Bewegungsbahn (6) des Fahrzeuges (2) aufgrund eines erfassten Lenkradwinkels und/oder Lenkwinkels bestimmt wird.

4. Verfahren nach einem der vorhergehenden Ansprüche, **dadurch gekennzeichnet, dass** die Bewegungsbahn (6) des Fahrzeuges (2) mittels eines Gierraten-Sensors bestimmt wird.

5. Verfahren nach einem der vorhergehenden Ansprüche, **dadurch gekennzeichnet, dass** die Bewegungsbahn (6) des Fahrzeuges (2) mittels eines Querbeschleunigungssensors bestimmt wird.

6. Verfahren nach einem der vorhergehenden Ansprüche, **dadurch gekennzeichnet, dass** mittels des Korrekturwertes aus der erfassten Länge (L₊) der Parklücke (1) eine tatsächliche Länge (L) der Parklücke bestimmt wird.

7. Verfahren nach einem der vorhergehenden Ansprüche, **dadurch gekennzeichnet, dass** der Korrekturwert kontinuierlich oder in kurzen zeitlichen Abständen erfasst wird.

## Claims

1. Method for assisting with the parking of a vehicle (2) into a parking space (1) which is arranged laterally with respect to the vehicle (2) to be parked, wherein a length (L) of the parking space (1) is detected by means of a sensor arrangement of the vehicle (2) while the vehicle (2) is driving past the parking space (1), and wherein a movement path (6) of the vehicle (2) which differs from straight-ahead travel of the vehicle (2) is detected while the vehicle (2) is travelling past the parking space (1), and wherein a correction value for the detected length (L₊) of the parking space (1) is acquired therefrom, **characterized in that** the movement path (6) of the vehicle (2) is determined on the basis of the detected difference between the distances travelled by the wheels of the two tracks of the vehicle (2).

2. Method according to Claim 1, **characterized in that** the movement path (6) of the vehicle (2) is determined on the basis of the rotation, detected by means of a sensor, of the vehicle (2) about its vertical axis.

3. Method according to Claim 1 or 2, **characterized in that** the movement path (6) of the vehicle (2) is determined on the basis of a detected steering wheel angle and/or steering angle.

4. Method according to one of the preceding claims, **characterized in that** the movement path (6) of the vehicle (2) is determined by means of a yaw rate sensor.

5. Method according to one of the preceding claims, **characterized in that** the movement path (6) of the vehicle (2) is determined by means of a lateral acceleration sensor.

6. Method according to one of the preceding claims, **characterized in that** an actual length (L) of the parking space is determined from the detected length (L₊) of the parking space (1) by means of the correction value.

7. Method according to one of the preceding claims, **characterized in that** the correction value is detected continuously or at short time intervals.

## Revendications

1. Procédé d'assistance d'une opération d'entrée en stationnement d'un véhicule (2) dans un emplacement de stationnement (1) qui se trouve sur le côté du véhicule (2) à mettre en stationnement, une longueur (L) de l'emplacement de stationnement (1) étant détectée pendant un passage à côté de l'emplacement de stationnement (1) par le véhicule (2) au moyen d'un arrangement de détection du véhicule (2) et une trajectoire de déplacement (6) du véhicule (2) différente d'un déplacement en ligne droite du véhicule (2) étant détectée pendant un passage à côté de l'emplacement de stationnement (1) et une valeur de correction pour la longueur détectée (L+) de l'emplacement de stationnement (1) étant déterminée à partir de celle-ci, **caractérisé en ce que** la trajectoire de déplacement (6) du véhicule (2) est définie en se basant sur la différence détectée entre les parcours des roues des deux bandes de circulation du véhicule (2).

2. Procédé selon la revendication 1, **caractérisé en ce que** la trajectoire de déplacement (6) du véhicule (2) est définie en se basant sur la rotation du véhicule (2) autour de son axe de hauteur, détectée au moyen d'un capteur.

3. Procédé selon la revendication 1 ou 2, **caractérisé en ce que** la trajectoire de déplacement (6) du véhicule (2) est définie en se basant sur un angle de volant de direction et/ou un angle de direction détectés.

4. Procédé selon l'une des revendications précédentes, **caractérisé en ce que** la trajectoire de déplacement (6) du véhicule (2) est définie au moyen d'un capteur de taux de lacet.

5. Procédé selon l'une des revendications précédentes, **caractérisé en ce que** la trajectoire de déplacement (6) du véhicule (2) est définie au moyen d'un capteur d'accélération transversale.

6. Procédé selon l'une des revendications précédentes, **caractérisé en ce qu'**une longueur réelle (L) de l'emplacement de stationnement est définie au moyen de la valeur de correction à partir de la longueur détectée (L+) de l'emplacement de stationnement (1).

7. Procédé selon l'une des revendications précédentes, **caractérisé en ce que** la valeur de correction est détectée continuellement ou à des intervalles de temps courts.
